Europäisches Patentamt

European Patent Office

Office européen des brevets

(11) Veröffentlichungsnummer: **0 405 475 A2**

# (12) EUROPÄISCHE PATENTANMELDUNG

(21) Anmeldenummer: **90112182.2**

(22) Anmeldetag: **27.06.90**

(51) Int. Cl.5: **G01N 1/20**

(30) Priorität: **27.06.89 DE 3920949**

(43) Veröffentlichungstag der Anmeldung:
**02.01.91 Patentblatt 91/01**

(84) Benannte Vertragsstaaten:
**DE ES FR IT**

(71) Anmelder: **SARTORIUS AG**
**Weender Landstrasse 94-108**
**D-3400 Göttingen(DE)**

(72) Erfinder: **Tröger, Helmut**
**Max-Born-Ring 18**
**D-3400 Göttingen(DE)**
Erfinder: **Marter, Horst**
**Garbenstrasse 17**
**D-3400 Göttingen(DE)**

(74) Vertreter: **Köhler, Rudolf**
**c/o Sartorius AG Weender Landstrasse**
**94-108**
**D-3400 Göttingen(DE)**

(54) An eine Prozess- oder Abfülleitung anschliessbares Probenentnahmegerät für Flüssigkeiten.

�éà Bei einem an eine Prozeß- oder Abfülleitung (HL) anschließbaren Probenentnahmegerät für Flüssigkeiten mit einem durch Anschluß (11) an die Entnahmeleitung (10,19) füllbaren Probenbehälter (2,3) mit definiertem Füllvolumen und einem Auslaß (13) für dessen Entleerung, wobei die Füllung und Entleerung durch geregelte Ventilstellung erfolgt, ist der Probenbehälter (2,3) als Kolben-Zylinderaggregat ausgebildet, wobei der Kolben (3) den Probenbehälter (2,3) in zwei gegeneinander abgedichtete Zylinderräume unterteilt und auf der Zuführseite der Probe von dieser von einer Null-Lage ausgehend bis zur Erreichung des definierten Füllvolumens entgegen einer auf der anderen Kolbenfläche wirkenden Gegenkraft bewegbar ist und die Entleerung des Probenbehälters (2,3) erfolgt durch diese Gegenkraft bei gleichzeitiger Aufhebung des Füllvorganges durch Öffnen des Probenauslasses (12). Das Probenentnahmegerät weist einen Gasdruckregler (18) mit Druckanzeige (21) auf der einen Zylinderseite, einen Druckanzeiger (16) mit Mehrwegeventil (8) auf der von den Proben beaufschlagten Zylinderseite, einen Stromspeicher (20), eine elektronische alpha-numerische Anzeigeeinheit (22, 23,24) und eine damit verknüpfte Steuer- und Regeleinheit auf, wobei die vorgenannten Elemente von einem gegen Spritzwasser abgedichteten Gehäuse (1´) zu einer Einheit umschlossen sind. Mit dem Gerät lassen sich auch schäumende bzw. $CO_2$-haltige Flüssigkeiten wie Bier, Fruchtwein, Sekt und Mineralwasser ohne Schwierigkeiten aus Abfülleitungen (HL) in definierten Volumina entnehmen, da dies unter Gegendruck erfolgt.

Fig. 1

EP 0 405 475 A2

# AN EINE PROZESS- ODER ABFÜLLEITUNG ANSCHLIESSBARES PROBENENTNAHMEGERÄT FÜR FLÜSSIGKEITEN

Die Erfindung betrifft ein an eine Prozeß- oder Abfüllleitung anschließbares Probenentnahmegerät für Flüssigkeiten mit einem durch Anschluß an die Entnahmeleitung füllbaren Probenbehälter mit definiertem Füllvolumen und einem Auslaß für dessen Entleerung, wobei die Füllung und Entleerung durch geregelte Ventilsteuerung erfolgt. Ein solches Probenentnahmegerät ist durch die DE-OS 33 38 782 bekannt und dient insbesondere zur aseptischen Probenentnahme von Flüssigkeiten aus einer Leitung in der Getränke-, Pharma- und Kosmetikindustrie. Der vertikal ausgerichtete Probenbehälter wird eingangsseitig und ausgangsseitig von je einem federbelasteten, druckluftgesteuerten Absperrschieber begrenzt. Über ein Entlüftungsventil wird das von der in den Probenbehälter einströmenden Flüssigkeit verdrängte Gasvolumen entlüftet.

Ein solches Probenentnahmegerät nach dem Stand der Technik hat die Aufgabe, in regelmäßigen Abständen aus einer Prozeßleitung oder einer Abfülleitung für die Qualitätskontrolle Proben in definierten Volumina zu entnehmen, um diese einer Qualitätskontrolle zu unterziehen.

Mit dem bekannten Gerät nach dem Stand der Technik ist die Einhaltung definierter Volumina bei stark gasenden Flüssigkeiten wie z.B. $CO_2$-haltigen Getränken wie Bier, Fruchtwein, Sekt und Mineralwasser schwierig.

Der Erfindung liegt daher die Aufgabe zugrunde, ein Probenentnahmegerät der eingangs genannten Art so weiterzubilden, daß auch Proben von schäumenden bzw. $CO_2$-haltigen Flüssigkeiten auf einfache Weise aus Prozeß- oder Abfülleitungen mit definiertem Volumen entnommen werden können.

Diese Aufgabe wird erfindungsgemäß dadurch gelöst, daß der Probenbehälter als Kolben-Zylinderaggregat ausgebildet ist, wobei der Kolben den Probenbehälter in zwei gegeneinander abgedichtete Zylinderräume unterteilt und auf der Zuführseite der Probe von dieser von einer Null-Lage ausgehend bis zur Erreichung des definierten Füllvolumens entgegen einer auf der anderen Kolbenfläche wirkenden Gegenkraft bewegbar ist und die Entleerung des Probenbehälters durch diese Gegenkraft bei gleichzeitiger Aufhebung des Füllvorganges durch Öffnen des Probenauslasses erfolgt. Das Probenentnahmegerät weist einen Gasdruckregler mit Druckanzeige auf der einen Zylinderseite, einen Druckanzeiger mit Mehrwegeventil auf der von den Proben beaufschlagten Zylinderseite, einen Stromspeicher, eine elektronische alphanumerische Anzeigeeinheit und eine damit verknüpfte Steuer-und Regeleinheit auf, wobei die vorgenannten Elemente von einem gegen Spritzwasser abgedichteten Gehäuse zu einer Einheit umschlossen sind.

Dadurch, daß der Füllvorgang des Probenbehälters unter dem Druck in der Prozeß- oder Abfülleitung einerseits und unter dem (geringeren) Gegendruck eines beweglichen Kolbens erfolgt, wird eine Entgasung bzw. Schaumbildung im Probenbehälter vermieden und definierte Volumina bei der Entnahme erreicht.

Der Erfindungsgedanke ist in einem Ausführungsbeispiel anhand der beiligenden Zeichnung näher erläutert. Dabei zeigt:

Fig. 1 schematisch den prinzipiellen Aufbau des Gerätes,

Fig. 2 einen Schnitt durch das Gehäuse. und das Kolbenzylinderaggregat des Gerätes,

Fig. 3 eine Draufsicht auf das Gerät in einer ersten Ausführungsform und

Fig. 4 eine Draufsicht auf das Gerät in einer bevorzugten Ausführungsform.

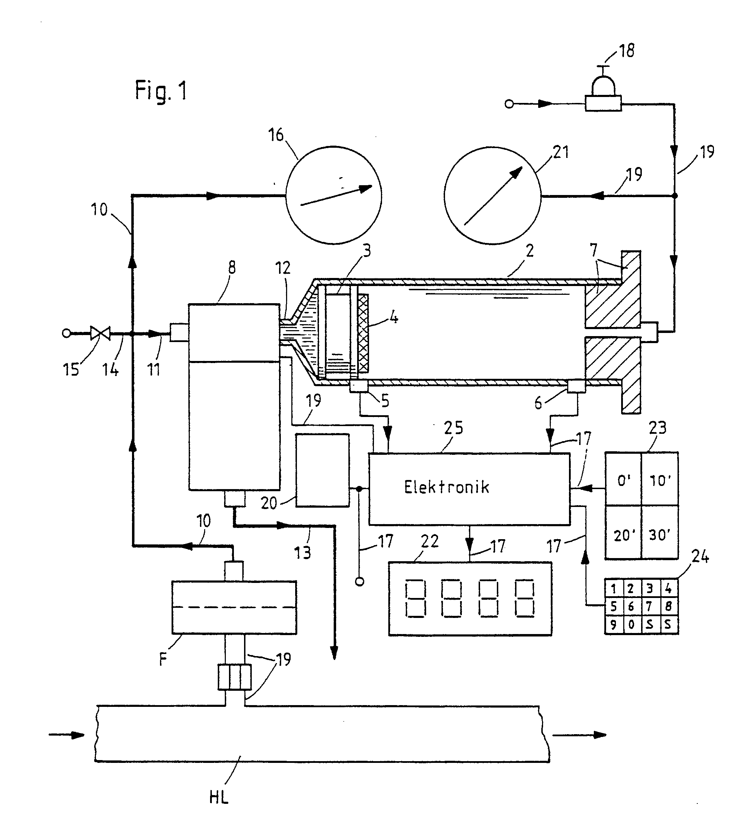

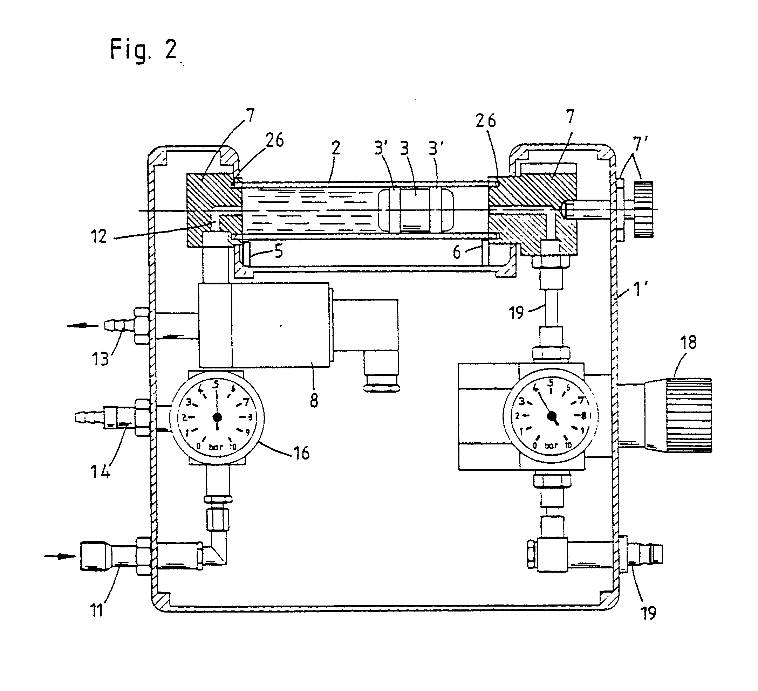

Gemäß Fig. 1 ist das in Fig. 2 bis 4 gezeigte Probenentnahmegerät stromabwärts hinter einem Filter F an eine Hauptleitung HL einer Prozeß- oder Abfülleitung angeschlossen. Der eigentliche Probenbehälter ist gebildet durch ein Kolbenzylinderaggregat 2,3, dessen beweglicher Kolben 3 den Zylinder 2 in zwei gegeneinander abgedichtete Fluidräume unterteilt. Der Kolben 3 steht einerseits unter dem Flüssigkeitsdruck der Probenflüssigkeit in den Leitungen 10,11, 12 und dem Wegeventil 8 (z.B. 3/2-Wege-Magnetventil) und andererseits unter dem Gasdruck in der Druckluftleitung 19 mit Druckregler 18 und Druckanzeiger 21. Gemäß Fig. 1 befindet sich der Kolben 3 in einer ersten Endlage nach dem Ausschieben einer Probe über die Leitung 12, Wegeventil 8 und Entleerungsleitung 13. Diese Endlage wird durch einen elektrischen oder mechanischen Sensor 5 (z.B. induktiver Sensor) abgetastet, welcher mit einer Stahlplatte 4 auf dem Kolben 3 aus Kunststoff zusammenarbeitet. Die zweite End lage wird definiert durch den zweiten Sensor 6 und die Zylinderhalterung 7. Das Mehrwegeventil 8 ist über die elektrischen Leitungen 17 mit einer schematisch angedeuteten Regelelektronik 25 verknüpft. Diese ist wiederum über die elektrischen Leitungen 17, einem Stromspeicher, Akku oder dergleichen, mit einer alphanumerischen Anzeige 22, einer Eingabeeinheit 24 und einem Timer 23 verknüpft. In der Leitung 10 für die Probenzuführung ist außerdem ein Druckanzeiger 16 und eine Entlüftungsleitung 14 mit Entlüftungsventil 15 angeordnet.

Die Probenentnahme aus der Hauptleitung HL erfolgt über vorgegebene Zeitintervalle von beispielsweise 10 Minuten oder 20 Minuten oder 30 Minuten, je nach Bedarf des Benutzers. Durch den Druck in der Hauptleitung HL wird die Probe durch das Filter F, durch die Leitung 10,11, das Wegeventil 8 und die Leitung 12 in den Zylinder 2 gedrückt, wobei sich der Kolben 3 je nach eingestelltem Differenzdruck unter dem Gegendruck in der Druckluftleitung 19 bis zum anderen Endanschlag 6,7 bewegt, ohne daß die $CO_2$-haltige Probenflüssigkeit die Möglichkeit hat, zu entgasen oder zu schäumen, bis die vorgegebene Füllmenge von beispielsweise 50 ml im Zylinder 2 erreicht ist. Danach schließt das Mehrwegeventil 8 und öffnet die Leitung 12 über die Entleerungsleitung 13 und schließt die Leitung 10, so daß die Probenflüssigkeit aus dem Zylinder unter Druckluft herausgedrückt werden kann.

Die hier beschriebene Gegenkraft in Form einer Druckluftquelle oder Gasquelle kann selbstverständlich ersetzt werden durch ein vorgespanntes und möglichst einstellbares Federelement.

Die hier angedeuteten Endanschläge in Form induktiver Sensoren können auch durch andere Sensoren wie Lichtschranken, Reed-Relais oder dergleichen ersetzt werden.

Die hier beschriebenen Einzelteile sind gemäß Fig. 2 in einem spritzwasserdichten Gehäuse 1' untergebracht. Der Zylinder 2 besteht vorzugsweise aus einem Präzisionsglaszylinder und der Kolben 3 aus einem Edelstahlkolben mit zwei Manschettendichtungen 3'. Der Sensor 6 ist vorzugsweise verstellbar ausgebildet, so daß damit die Einstellung variabler Volumina im Zylinder 2 möglich sind. Es ist aber auch möglich, die Volumina dadurch zu verändern, daß die Länge des Kolbens 3 verändert wird. Der Glaszylinder 2 ist beidseitig durch eine Halterung 7 zwischen O-Ringen 26 festgelegt, wobei die rechte Halterung 7 über eine Mutter und Kontermutter 7' justierbar ist.

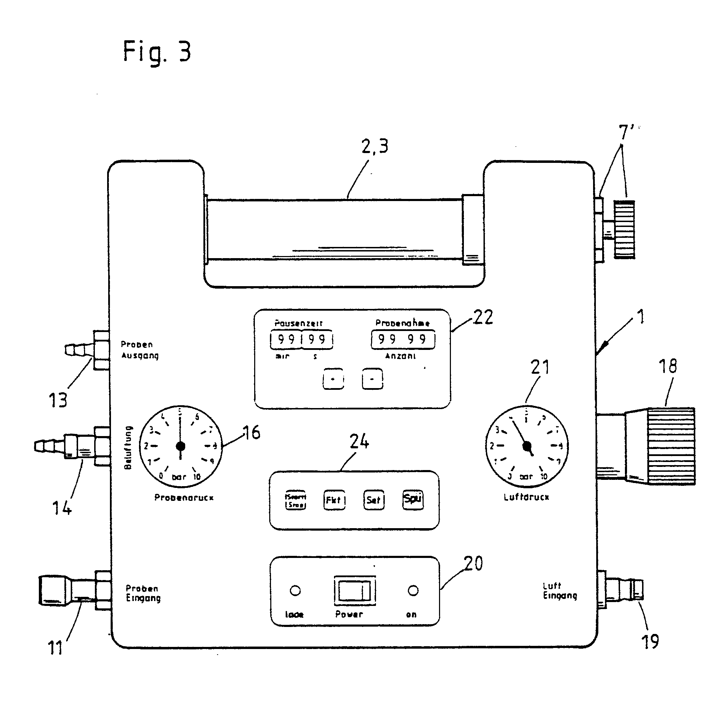

Gemäß Fig. 3 sind in der Anzeige 22 die Pausenzeit und Anzahl der Probennahme angezeigt und über die PLUS- und MINUS-Taste vorwählbar. In der Eingabeeinheit 24 ist auch eine spezielle Taste für den Abruf eines Spülvorganges vorgesehen.

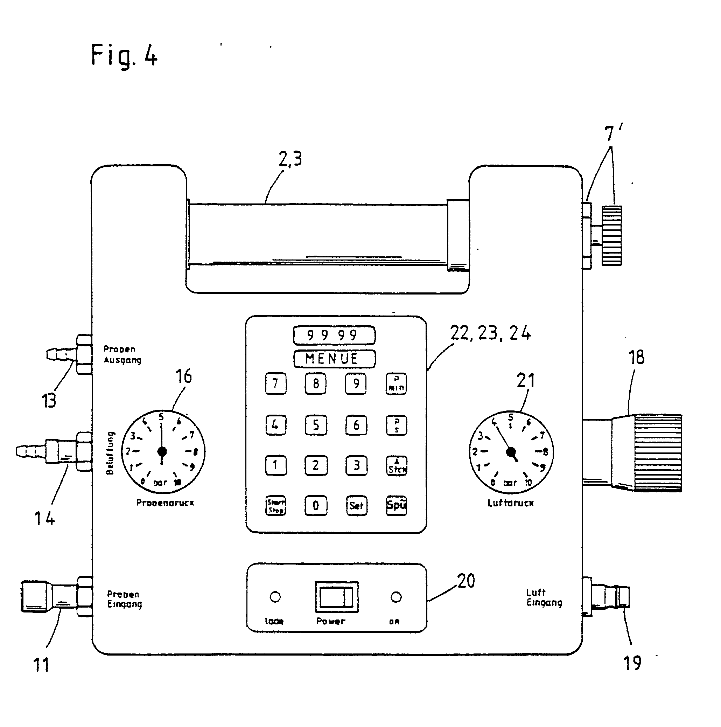

In der Ausführungsform gemäß Fig. 4 ist die zweizeilige alphanumerische Anzeige 22 kombiniert mit der Eingabeeinheit 24 und dem Timer 23.

Nach Anschließen des Probenentnahmegerätes 1 direkt an die Leitung 9 bzw. hinter dem Filter F an die Leitung 10 können vom Bediener das Druckregelventil 18 so eingestellt werden, daß der Luftdruck in der Leitung 19 und damit auf der Kolbenfläche ca. 0,5 bis 1,5 bar kleiner ist als der Druck auf den Kolben 3 auf der Probenentnahmeseite. Danach erfolgt die Vorwahl des Probenvolumens entweder über die Einstellung des Kolbenhubel oder über den verstellbaren Sensor 6. Weiterhin erfolgt eine Vorwahl der Pausenzeit an der Eingabe-Anzeigeeinheit 22,23,24 und eine Vorwahl der Probenanzahl. Das Probenentnahmegerät 1 nimmt die entspre chende Anzahl von Proben bei Einhaltung der vorgewählten Pausenzeit, geregelt durch den per Menü gewählten Programmablauf. Nach Programmende kann das Filtergerät F abgenommen werden und der darin enthaltene Membranfilter mit den Probenrückständen z.B. einer mikrobiologischen Untersuchung unterzogen werden.

Wird das Probenentnahmegerät 1 direkt an die Hauptleitung HL angeschlossen, so können die periodisch abgeführten Proben über die Leitung 13 ebenfalls gesammelt und zur Analyse verwertet werden.

Das hier speziell für die Probenentnahme von gasenden oder schäumenden Flüssigkeiten beschriebene Gerät ist selbstverständlich auch verwendbar für die Probenentnahme von Flüssigkeiten allgemeiner Art aus einer Prozeß- oder Abfülleitung.

**Ansprüche**

1. An eine Prozeß- oder Abfülleitung (HL) anschließbares Probenentnahmegerät (1) für Flüssigkeiten mit einem durch Anschluß an die Entnahmeleitung füllbaren Probenbehälter mit definiertem Füllvolumen und einem Auslaß für dessen Entleerung, wobei die Füllung und Entleerung durch geregelte Ventilstellung erfolgt, dadurch gekennzeichnet , daß Probenbehälter (2,3) als Kolben-Zylinderaggregat ausgebildet ist, wobei der Kolben (3) den Probenbehälter (2,3) in zwei gegeneinander abgedichtete Zylinderräume unterteilt und auf der Zuführseite der Probe von dieser von einer Null-Lage ausgehend bis zur Erreichung des definierten Füllvolumens entgegen einer auf der anderen Kolbenfläche wirkenden Gegenkraft bewegbar ist und die Entleerung des Probenbehälters (2,3) durch diese Gegenkraft bei gleichzeitiger Aufhebung des Füllvorganges durch Öffnen des Probenauslasses (12) erfolgt.

2. Probenentnahmegerät nach Anspruch 1, dadurch gekennzeichnet , daß der Einlaß- und Auslaß (12) des Probenbehälters (2,3) an ein Mehrwegeventil (8) angeschlossen ist, mit welchem die Probe aus der Probenleitung (9 bis 11) in den Probenbehälter (2,3) einspeisbar und aus diesem wieder entfernbar ist.

3. Probenentnahmegerät nach Anspruch 1 und 2, dadurch gekennzeichnet , daß der Weg des Kolbens (3) durch mechanische und/oder elektrische Endanschläge (5,6,7) bzw. Sensoren begrenzt ist und diese mit einer elektrischen Steuer- und Auswerteeinrichtung (20 bis 25) verbunden sind.

4. Probenentnahmegerät nach Anspruch 1 bis 3, dadurch gekennzeichnet , daß mindestens einer der Endanschläge bzw. Sensoren (6) zur variablen Begrenzung des Kolbenweges verstellbar ausgebildet ist.

5. Probenentnahmegerät nach Anspruch 1 bis 4, dadurch gekennzeichnet , daß die Gegenkraft des Kolbens (3) durch ein vorspannbares Federelement gebildet ist.

6. Probenentnahmegerät nach Anspruch 1 bis 4, dadurch gekennzeichnet , daß die Gegenkraft durch ein in den vom Probenraum abgetrennten Zylinderraum einspeisbares Druckgas gebildet ist.

7. Probenentnahmegerät nach Anspruch 1 bis 6, dadurch gekennzeichnet , daß das Kolben-Zylinderaggregat (2,3) aus einem Glaszylinder (2) und einem Kolben (3) aus Edelstahl mit Manschettendichtung (3') gebildet ist.

8. Probenentnahmegerät nach Anspruch 1, aufweisend einen Gasdruckregler (18) mit Druckanzeige (21) auf der einen Zylinderseite,
einen Druckanzeiger (16) mit Mehrwegeventil (8) auf der von den Proben beaufschlagten Zylinderseite, einen Stromspeicher (20),
eine elektronische alpha-numerische Anzeigeeinheit (22, 23,24) und
eine damit verknüpfte Steuer- und Regeleinheit, wobei die vorgenannten Elemente von einem gegen Spritzwasser abgedichteten Gehäuse (1') zu einer Einheit umschlossen sind.

Fig. 1

Elektronik

| | |
|---|---|
| 0' | 10' |
| 20' | 30' |

| 1 | 2 | 3 | 4 |
|---|---|---|---|
| 5 | 6 | 7 | 8 |
| 9 | 0 | S | S |

HL

# Fig. 2

# Fig. 3

Fig. 4